# EUROPEAN PATENT APPLICATION

(11) **EP 4 485 854 A1**
(43) Date of publication of application: **01.01.2025**
(21) Application number: 23215465.8
(22) Date of filing: 11.12.2023
(51) Int. Cl.: H04L 9/40, H04W 12/086

(54) **METHOD OF SECURE COMPARTMENTALIZATION FOR IOT APPLICATION AND IOT GATEWAY USING THE SAME**

(30) Priority: 30.06.2023 US 202363524226 P; 30.11.2023 TW 112146513
(71) Applicant: Moxa Inc., 242032 New Taipei City (TW)
(72) Inventor: HSU, Wen-Lung, 242032 New Taipei City (TW); KAO, Chih-Wen, 242032 New Taipei City (TW)
(74) Representative: Kurig, Thomas

(57) **Abstract**

A method of secure compartmentalization for IoT application and a IoT gateway (110, 410, 510, 610, 710, 810) using the same are provided. The method is adapted to the IoT gateway (110, 410, 510, 610, 710, 810) and includes the following steps. A plurality of zones (Z1, Z2, Z3, Z6) corresponding to a plurality of subnets are created by partitioning the subnets. An application installed in the IoT gateway (110, 410, 510, 610, 710, 810) is deployed to one of the zones (Z1, Z2, Z3, Z6). A conduit policy (CP1_1, CP1_2, CP2, CP3, CP4, CP5, CP71, CP72, CP73, CP74) associated with at least one of the zones (Z1, Z2, Z3, Z6) is configured. Packet transmission of the zones is managed based on the conduit policy (CP1_1, CP1_2, CP2, CP3, CP4, CP5, CP71, CP72, CP73, CP74).

## Description

### BACKGROUND

### Technical Field

The disclosure relates to a network security technology, and in particular, to an Method of secure compartmentalization for IoT application and an Internet of Things gateway using the method.

### Description of Related Art

The Internet of Things (IoT) gateway is a solution for facilitating IoT communication, The IoT gateway mainly serves as a transmission bridge between IoT devices and cloud servers. A significant amount of IoT data may be transmitted to cloud servers through IoT gateways for real-time monitoring and analysis. Furthermore, the IoT gateway plays a crucial role in various scenarios, assisting enterprises in managing data transmission. The IoT gateway may forward the collected sensing data to the cloud server via an untrusted network, or forward control commands from the untrusted network to IoT devices or control devices. Therefore, in the IoT environment, since the IoT devices and the control devices may directly connect to the untrusted network through a IoT gateway, it becomes necessary to establish a firewall to safeguard these IoT devices, the control equipments and the IoT gateway itself from network attacks.

However, as the functionality of the IoT gateway continues to evolve, the IoT gateway will be responsible for managing more complex and numerous applications, such as data collection and edge computing. Further, the IoT gateway also engages in data transmission and automation control with equipment operating at different security levels. As a result, the conventional firewall policies offered by the IoT gateway or other network devices no longer meet the current requirements.

### SUMMARY

In view of this, embodiments of the disclosure provide a method of secure compartmentalization for IoT application and a IoT gateway using the same, which may solve the above technical problems.

The method of secure compartmentalization for IoT application according to the embodiment of the disclosure is adapted to a IoT gateway and includes (but is not limited to) the following steps. A plurality of zones corresponding to a plurality of subnets are created by partitioning the subnets. An application installed in the IoT gateway is deployed to one of the zones. A conduit policy associated with at least one of the zones is configured. Packet transmission of the zones is managed based on the conduit policy.

The IoT gateway according to the embodiment of the disclosure includes a transceiver, a storage device and a processor. The processor is connected to the transceiver and the storage device, and is configured to perform the following operations. A plurality of zones corresponding to a plurality of subnets are created by partitioning the subnets. An application installed in the IoT gateway is deployed to one of the zones. A conduit policy associated with at least one of the zones is configured. Packet transmission of the zones is managed based on the conduit policy.

Based on the above, in the embodiment of the disclosure, after the plurality of zones corresponding to the plurality of subnets are created, the conduit policy for managing packet transmission may be configured for these zones respectively. In addition, multiple applications installed on the IoT gateway may be compartmentalized to the different zones. Therefore, the packet transmission of each application may be controlled based on the conduit policy of the zone. In this way, the network security defense capabilities of the IoT gateway may be greatly improved, and the flexibility and efficiency of the security management of the IoT gateway may also be improved.

To make the aforementioned more comprehensible, several embodiments accompanied with drawings are described in detail as follows.

### BRIEF DESCRIPTION OF THE DRAWINGS

Figure 1 is a schematic diagram of an Internet of Things system according to an embodiment of the disclosure.
FIG. 2 is a block diagram of an IoT gateway according to an embodiment of the disclosure.
FIG. 3 is a flow chart of a method of secure compartmentalization for IoT application according to an embodiment of the disclosure.
Figure 4 is a schematic diagram of a zoning model according to an embodiment of the disclosure.
FIG. 5 is a schematic diagram of deployment an application to a zone according to an embodiment of the disclosure.
FIG. 6 is a schematic diagram of establishing a zone according to an embodiment of the disclosure.
FIG. 7A to 7D are schematic diagrams of conduit policies of zones according to an embodiment of the disclosure.
FIG. 8 is a schematic diagram of deploying applications to zones according to zoning labels according to an embodiment of the disclosure.

### DESCRIPTION OF THE EMBODIMENTS

Some embodiments of the disclosure accompanied with drawings are described in detail as follows. The reference numerals in the following description are regarded to represent the same or similar elements when the same reference numeral appears in the different drawings. These embodiments are only a part of the disclosure, and do not disclose all possible implementation manners of the disclosure. More precisely, these embodiments are just examples of the apparatuses and method of the disclosure that are within the scope of the patent application.

The disclosure relates to a method of secure compartmentalization for IoT application and an Internet of Things (IoT) gateway using the method. In order to enhance the security of IoT, this disclosure provides a zoning model that compartmentalizes IoT applications into a plurality of zones. The zoning model may be used to manage core services and application services installed on the IoT gateway, thereby enhancing the security of the existing IoT application framework. An IoT gateway may establish multiple zones to isolate various IoT applications into these zones. Communication between zones may be carried out through conduits. In this disclosure, packet transmission of IoT applications may be managed by generating conduit policies in these zones.

From another perspective, the disclosure provides an IoT gateway that has the ability to isolate data, applications and services within the IoT gateway based on a zoning model. By compartmentalizing multiple applications into multiple zones, access to some important system profiles deployed in the IoT gateway may be denied. In some embodiments, the zoning model provided by the disclosure may be seamlessly built on the information technology (IT) framework of existing IoT applications without modifying the existing IT framework, so as to enable security management in the Operational technology (OT) domain in an industrial environment become robust and efficient.

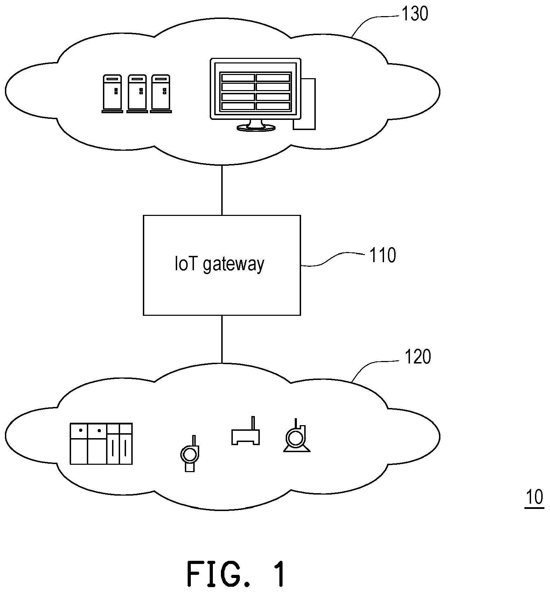

FIG. 1 is a schematic diagram of an IoT system according to an embodiment of the disclosure. Referring to FIG. 1, the IoT system 10 includes an IoT gateway 110, a local network 120 and an external network 130. IoT system 10 may be an Industrial Internet of Things (IIoT) system. A IIoT refers to the expansion and use of the IoT in industrial applications.

Local network 120 may include a plurality of IoT devices, one or more control devices, and one or more network devices. The IoT devices may be sensors, cameras, industrial equipment, measurement equipment, etc. The control device may be a computer, a programmable logic controller (PLC), etc. The devices in local network 120 may be connected to IoT gateway 110 directly or indirectly. For example, the control device may communicate with the IoT gateway 110 through a suitable communication protocol (such as Ethernet protocol, IP or other packet protocols, etc.). The IoT devices may be connected to control devices, network devices, or IoT gateways 110 through wired or wireless communication links that support communication protocols such as Wi-Fi, Bluetooth, WirelessHART, and HART-IP.

The IoT gateway 110 is connected between the local network 120 and the external network 130. In some embodiments, one or more application(s) may be deployed and installed in the IoT gateway 110 . Based on the applications deployed in the IoT gateway 110, the IoT gateway 110 may provide various IoT functions, such as data collection, edge computing, security authentication, etc. The applications may be system services, docker containers and so forth. From another perspective, the applications may be provided by a cloud computing platform, such as Azure platform, Amazon Web Services (AWS) platform and so forth, and such applications allows user to deploy and run cloud intelligence directly on the IoT gateway 110.

The external network 130 may include private servers or public servers provided by the cloud computing platform. It should be noted that, the IoT gateway 110 may connect to the devices in the external network 130 via the untrusted network. Namely, the external network 130 may include an untrusted network.

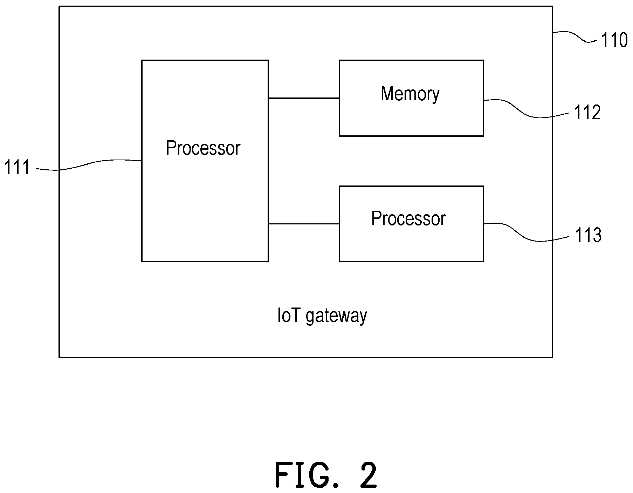

FIG. 2 is a block diagram of an IoT gateway according to an embodiment of the disclosure. Referring to FIG. 2 , the IoT gateway 110 includes a transceiver 113 , a memory 112 and a processor 111 .

The memory 112 may be used to store instructions, program codes, software modules, etc., and may be, for example, any type of fixed or removable random access memory (RAM), read-only memory (read-only memory (ROM), flash memory (flash memory) or other similar devices, integrated circuits and combinations thereof.

The processor 111 may be a central processing unit (CPU), a general-purpose processor, or other programmable general-purpose or special-purpose microprocessor (Microprocessor), or a digital signal processor (DSP), programmable controller, Field Programmable Gate Array (FPGA), Application-Specific Integrated Circuit (ASIC) or other similar components or a combination of the above components.

In different embodiments, the memory 112 may be a separate device independent of the processor 111, or may be integrated in the processor 111.

The processor 111 may access and execute the software module recorded in the memory 112 to implement the method of secure compartmentalization for IoT application in the embodiment of the disclosure. The software modules described above may be broadly construed to mean instructions, instruction sets, code, code, programs, applications, software packages, threads, functions, etc., whether referred to as software, firmware, middleware, microcode, hardware description language, or others.

The transceiver 113 has a transmitter (for example, a transmission circuit) and a receiver (for example, a reception circuit). In some embodiments, the transceiver 113 may be used to send and receive time-frequency division information. Transceiver 113 may perform low-noise amplification (LNA), impedance matching, analog-to-digital conversion (ADC), digital-to-analog conversion (DAC), frequency mixing, up and down frequency conversion, filtering, amplification, and/or similar operations. For example, transceiver 113 may be a WiFi or Bluetooth transceiver compliant with the 802.xx standard. For example, the transceiver 113 may be included in a USB port or interface used to establish a wired connection.

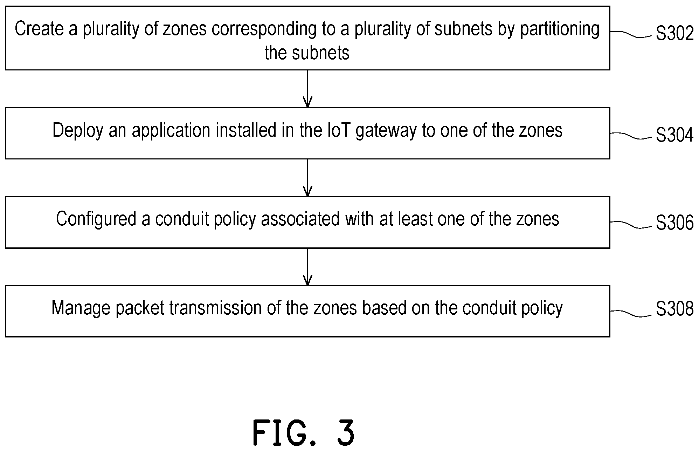

FIG. 3 is a flow chart of a method of secure compartmentalization for IoT application for Internet of Things applications according to an embodiment of the disclosure. Please refer to FIG. 3. The method in this embodiment may be executed by the IoT gateway 110 in FIG. 1. The details of each step in Figure 3 will be described below with reference to the components shown in FIGs. 1 and 2.

In step S302, the processor 111 may create a plurality of zones corresponding to a plurality of subnets by partitioning the subnets. The number of zones is not limited in the disclosure, which may be configured according to actual needs. In some embodiments, the processor 111 may partition the subnets by establishing a virtual network interface, and each subnet corresponds to an IP address range. In other words, these zones may be created by generating virtual bridges or virtual networks, and each zone may be associated with a range of IP addresses of a corresponding subnet.

In step S304, the processor 111 may deploy an application installed in the IoT gateway to one of the zones. Further, each zone may be referred to a logical grouping of applications with similar security requirements. Applications installed in the IoT gateway 110 may be containers, services or daemons. Furthermore, in some embodiments, each application deployed in the IoT gateway 110 may be assigned to a corresponding zone according to the zoning label of each application. The zoning labels of the applications may be set according to a predefined rule or user operations..

For example, some applications related to information technology (Information Technology, IT) services may be deployed in the first zone, and some applications related to operational technology (Operational Technology, OT) services may be deployed in the second zone. In addition, some applications related to core services may be deployed in the third zone.

In some embodiments, the processor 111 may assign a specific IP address within the IP address range of a certain subnet (ie, one of the subnets) to an application to deploy the application to one of the zones corresponding to the certain subnet. More specifically, when the processor 111 determines to deploy an application to the first zone, the processor 111 may assign an IP address within the IP address range of the subnet corresponding to the first zone to the application. In the case where the application is assigned this specific IP address, this application may be considered to be compartmentalized into a corresponding zone.

In step S306, the processor 111 may configure a conduit policy associated with at least one of the plurality of zones. In step S308, the processor 111 may manage packet transmission of the zones according to the conduit policy. The conduit policy may include access rules for at least one of the zones. In this disclosure, a conduit may be referred to a controllable communication path or communication channel between different zones. Correspondingly, the conduit policy may be used to manage packet transmission between zones. For example, a conduit policy may prevent the transmission of packets from a first zone to a second zone. In addition, the conduit policy may be used to manage packet transmission between a zone including some applications in the IoT gateway 110 and a untrusted network (ie, external networks).

In some embodiments, the plurality of zones established by the processor 111 may include an Information Technology (IT) service zone and an Operational Technology (OT) service zone. The IT service zone may include at least one IT service application, and the OT service zone may include at least one OT service application. In addition, the zones established by the processor 111 may also include an administration zone, and the administration zone may include at least one security service application.

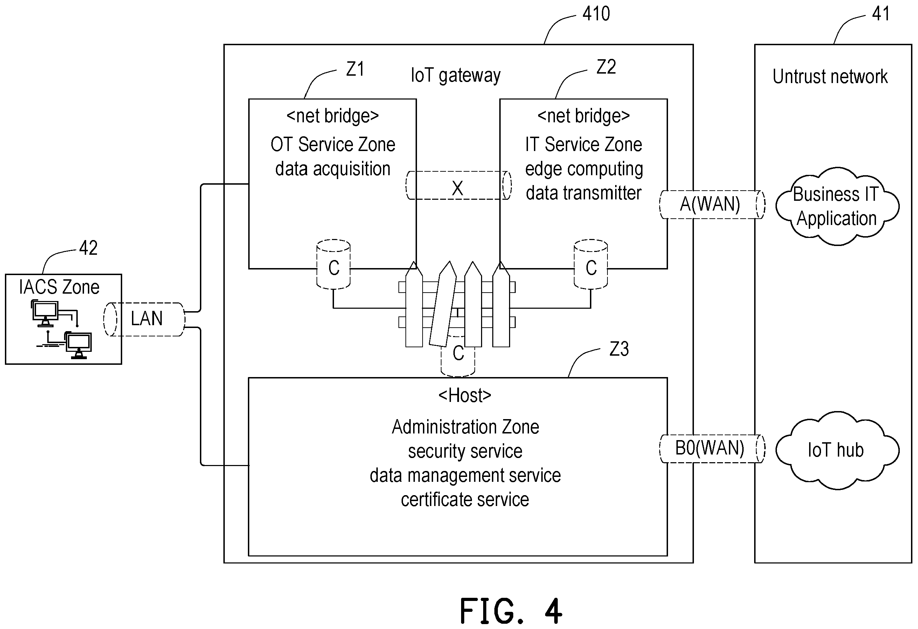

FIG. 4 is a schematic diagram of a zoning model according to an embodiment of the disclosure. Referring to FIG. 4, the IoT gateway 410 may deploy applications to three zones Z1 to Z3. In this embodiment, zone Z1 is an OT service zone, and zone Z2 is an IT service zone. Zone Z3 is an administration zone.

OT service applications related to OT services, such as data acquisition applications, may be deployed to zone Z1. IT service applications related to IT services, such as edge computing applications and data transmission applications, may be deployed in zone Z2. Applications related to core services, such as security service applications, device management service applications, and credential service applications, may be deployed to zone Z3.

Applications in zone Z1 and zone Z3 may communicate with devices in Industrial Automation and Control Systems (IACS) Zone 42 over a local area network (LAN) to perform functions related to devices in IACS Zone 42, such as collecting data from a IoT devices or a control industrial equipment, etc. Applications in zone Z2 and zone Z3 may communicate with the untrusted network 41 over a wide area network (WAN) to perform functions related to devices within the untrusted network 41, such as transmitting data to a cloud server or receiving control commands for controlling devices in IACS zone 42 from an external server, etc. It should be noted that, communication between zone Z1 and zone Z2 may be prohibited. By compartmentalizing multiple applications of the IoT gateway 410 into zones Z1 to Z3, the packet transmission of internal services of the IoT gateway 410 may be effectively managed, thereby improving the security of the Internet of Things.

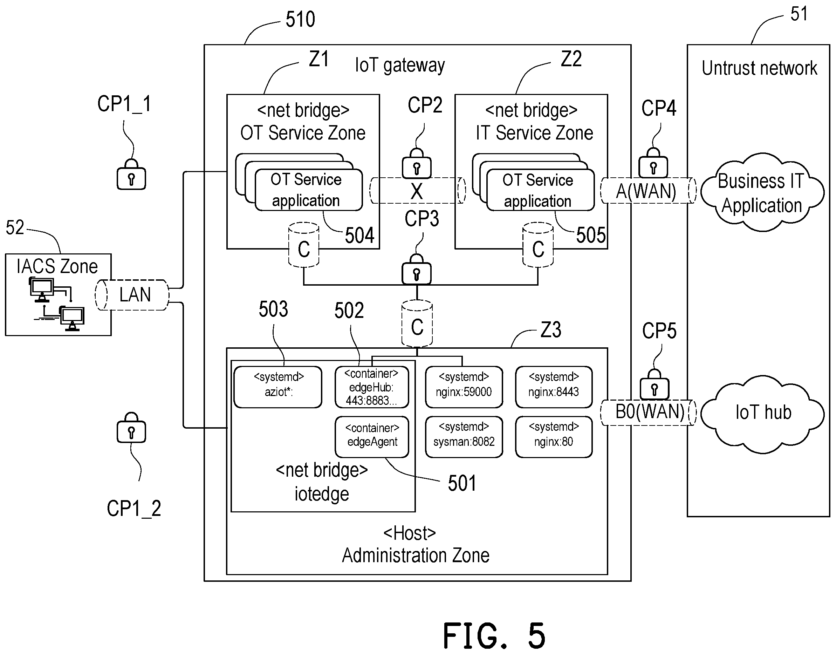

FIG. 5 is a schematic diagram of deployment an application to a zone according to an embodiment of the disclosure. Referring to Figure 5, after creating zones Z1 to Z3, the conduits between these zones Z1 to Z3 may be designed to manage access, prevent unauthorized activities, prevent the spread of threats or malware, and maintain the integrity and confidentiality of transmissions.

In some embodiments, the IoT gateway 510 may configure a conduit policy associated with at least one of the zones Z1 to Z3. Specifically, the IoT gateway 510 may configure a conduit policy for one or more conduits, so that the packet transmission of the application may be managed according to the conduit policy of the conduit. The IoT gateway 510 may configure a conduit policy CP1_1 for the conduit between the zone Z1 and the IACS zone 52, and the IoT gateway 510 may configure another conduit policy CP1_2 for the conduit between the zone Z3 and the IACS zone 52, to manage and monitor the packet transmission between the application in the zone Z1 and the IACS zone 52 and the packet transmission between the application in the zone Z3 and the IACS zone 52. The conduit policies CP1_1 and CP1_2 may be the same or different, which is not limited in this disclosure.

The IoT gateway 510 may configure the conduit policy CP2 for the conduit between the zone Z1 and the zone Z2, so that the packet transmission between the application in the zone Z1 and the application in the zone Z2 may be managed and monitored. In some embodiments, based on the conduit policy CP2, applications in zone Z1 and applications in zone Z2 may not be able to communicate with each other. In some embodiments, the IoT gateway 510 may omit configuring the conduit policy for the conduit between zone Z2 and zone Z1. That is, if packet transmission is required in some cases, the conduit policy CP2 between zone Z2 and zone Z1 may be configured accordingly.

In addition, the IoT gateway 510 may configure the conduit policy CP3 for the conduit between the zone Z1 and the zone Z3 and the conduit between the zone Z2 and the zone Z3. Therefore, packet transmission between applications in zone Z2 and applications in zone Z3 may be managed and monitored, as well as packet transmission between applications in zone Z1 and applications in zone Z3 may be managed and monitored.

The IoT gateway 510 may configure the conduit policy CP4 for the conduit between the zone Z2 and the untrusted network 51, so that the packet transmission between the application in the zone Z2 and the untrusted network 51 may be managed and monitored. The IoT gateway 510 may also configure the conduit policy CP5 for the conduit between the zone Z3 and the untrusted network 51, so that the packet transmission between the application in the zone Z3 and the untrusted network 51 may be managed and monitored.

It should be moted that, the applications in the different zones Z1 to Z3 may belong to a single service module provided by a cloud platform. For example, the application of the service module "IoTedge" may be compartmentalized to different zones Z1 to Z3. As shown in FIG. 5, applications 501 to 503 of the "IoTedge" service module may be compartmentalized to zone Z3. The application 504 of the service module "IoTedge" may be compartmentalized to zone Z1, and the application 505 of the service module "IoTedge" may be compartmentalized to zone Z2. That is to say, the method of the present disclosure may be implemented on the existing IoT application framework.

In some embodiments, the IoT gateway 510 may obtain a service module provided by a cloud service platform, wherein the service module includes one or more applications. When the application of the service module belongs to a high data security level, the IoT gateway 510 may deploy the application to the administration zone. When the application of this service module belongs to a low data security level, the IoT gateway 510 may deploy the application to the IT service zone or OT service zone. More specifically, the service modules provided by the cloud service platform may include multiple applications, and these applications may be compartmentalized to different zones according to the security level of the data processed by the applications. Multiple applications of a single service module provided by the cloud platform may include applications corresponding to the highest data security level (e.g. cloud service platform essential and security function) and applications corresponding to the low data security level. In the example of FIG. 5, when installing the service module provided by the cloud service platform on the IoT gateway 510, applications corresponding to the highest data security level (such as applications 501 to 503) may be deployed to zone Z3, and the other applications of the same service module corresponding to the low data security level (such as application 504 or 505) may be deployed to zone Z1 or Z2 according to scenario requirements. In some embodiments, applications cannot be deployed to the administration zone based on users' setting (i.e., users cannot set the security level of applications to the highest data security level, or users cannot assign any application to the administration zone) to improve the security.

In some embodiments, a certain application deployed in IoT gateway 510 may be assigned a zoning label. Therefore, the application may be deployed to the corresponding zone based on the zoning label. The zoning labels of the applications may be assigned based on user operations or predefined rules. For example, one or more applications in zone Z1 may be assigned the same zoning label in order to be grouped into the same zone Z1. For example, for a Docker container, zoning labels may be assigned by setting the parameter "--network". For Azure IoT Edge modules, zoning labels may be assigned by setting the parameter "NetworkMode". For Linux system services, zoning labels may be assigned by setting the parameter "RestrictNetworkInterfaces".

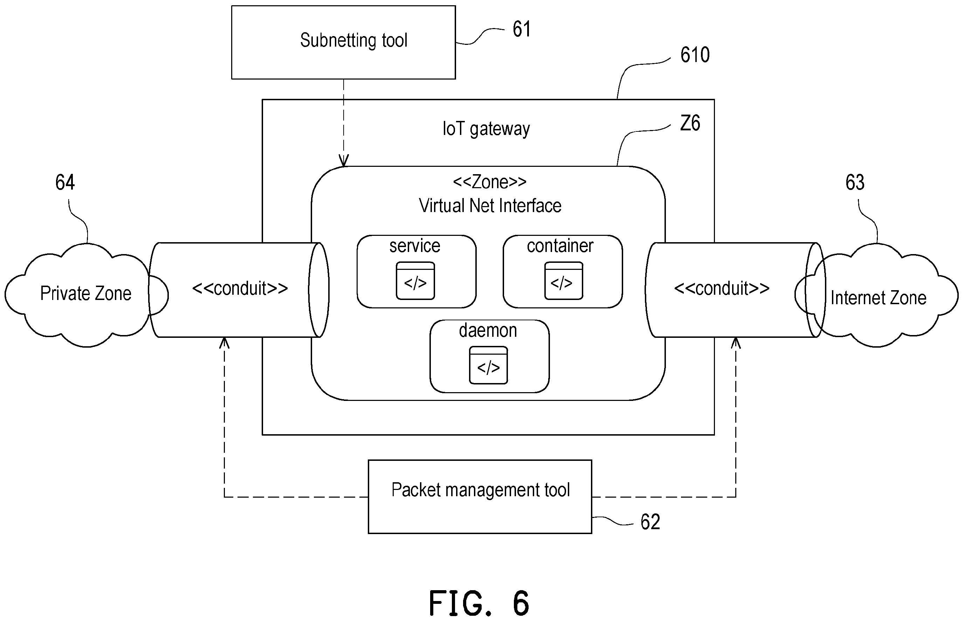

FIG. 6 is a schematic diagram of establishing a zone according to an embodiment of the disclosure. Referring to FIG. 6 , the IoT gateway 610 may use the subnetting tool 61 to create a plurality of zones (eg, aone Z6). The above-mentioned subnetting tool 61 may create a virtual network interface (virtual net interface) to generate a subnet corresponding to an IP address range. The IoT gateway 610 may create multiple zones by dividing IP address ranges or using network namespaces. For example, the IoT gateway 610 may create multiple zones respectively corresponding to different IP address ranges by establishing Docker bridges or virtual networks (Vnets). The IoT gateway 610 may assign an IP address within a certain subnet to a specific application deployed in the loT gateway 610, thereby allocating the specific application to a zone corresponding to the subnet. For example, the IP addresses of all applications in zone Z6 are within the same IP address range of the subnet corresponding to zone Z6 (for example, 192.168.*).

In addition, by using a packet management tool 62, such as iptables, nftables or a firewall, the communication of the conduit between the Internet zone 63 and the zone Z6 and the conduit between the private zone 64 and the zone Z6 may be managed. That is, conduit policies may be configured for each conduit by using iptables, nftables, or firewalls. Therefore, based on the conduit policy configured using iptables, nftables or firewall, network traffic may be controlled and managed according to predefined rules and policies to enhance the network security of IoT systems.

In some embodiments, these zones may include a first zone and a second zone. The conduit policy associated with the first zone may includes a plurality of rules, and the rules may include allowing packets to be transmitted from the first zone to untrusted network, denying packets to be transmitted from the first zone to a workplace zone via a local area network, denying packets to be transmitted from the untrusted network to the first zone, or conditionally allowing packets to be transmitted from the untrusted network to the first zone

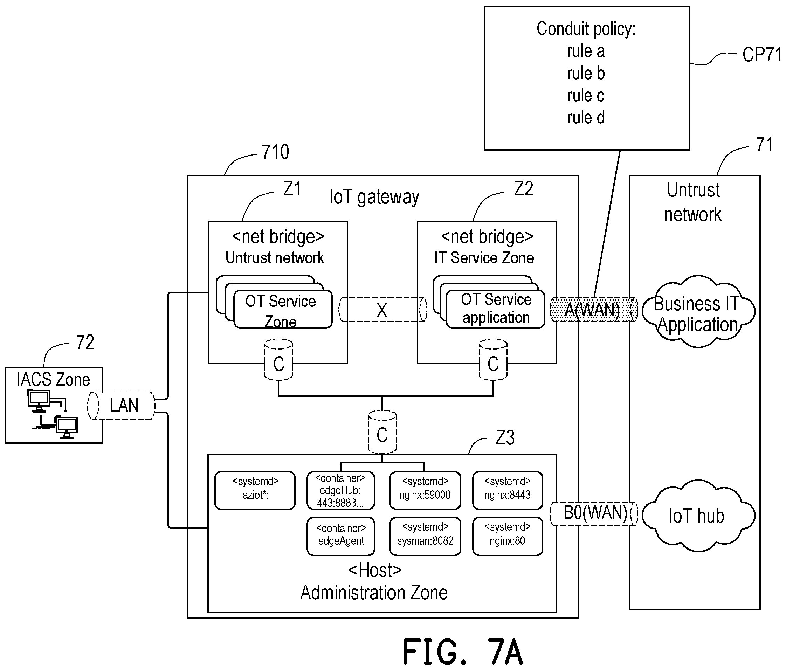

For example, FIG. 7A is a schematic diagram of a conduit policy of zones according to an embodiment of the disclosure. Referring to FIG. 7A , the IoT gateway 710 may configure a conduit policy CP71 between zone Z2 and the untrusted network. Zone Z2 may be an IT service zone. The conduit policy CP71 of zone Z2 may include at least one of rule a, rule b, rule c and rule d.

Rule a: Allow packets to be transmitted from zone Z2 to untrusted network 71. Rule b: Deny packets to be transmitted from zone Z2 to the workplace zone 72 via the local area network LAN. Rule c: Deny packets to be transmitted from untrusted network 71 to zone Z2. Rule d: Conditionally allow packets to be transmitted from untrusted network 71 to zone Z2. Based on this, the conduit between the IT service zone and the untrusted network 71 may be monitored and managed to prevent network attacks from the untrusted network 71 (such as distributed denial of service (DDoS)).

In some embodiments, these zones may include a first zone, a second zone, and a third zone. The conduit policy associated with the third zone may include a plurality of rules, and the rules may include denying packet transmission between a first application in the first zone or the second zone and a second application in the third zone, or allowing packet transmission between the first application in the first zone or the second zone and the second application in the third zone. The rules further comprise denying packets to be transmitted from untrusted network to the third zone.

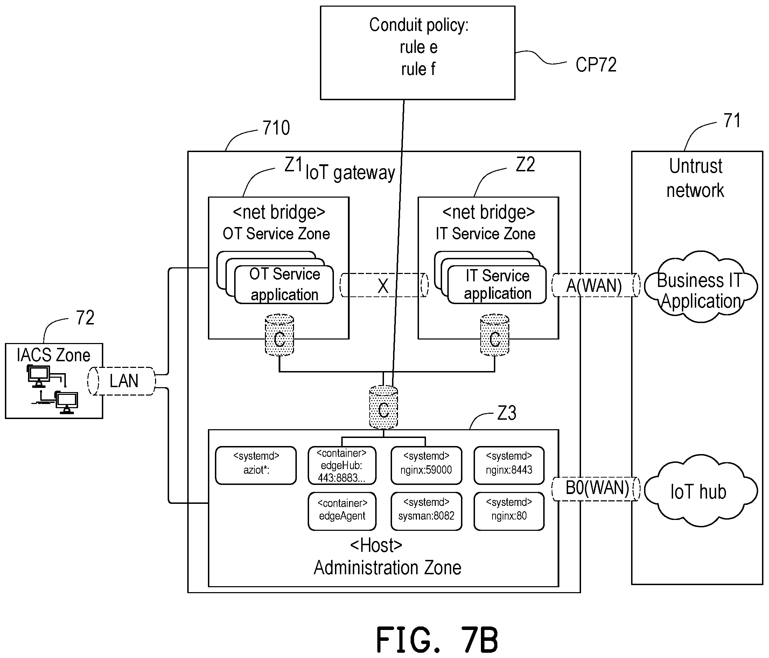

For example, FIG. 7B is a schematic diagram of a conduit policy of zones according to an embodiment of the disclosure. Referring to FIG. 7B , the IoT gateway 710 may configure a conduit policy CP72 for the conduit between zone Z2 and zone Z3 and the conduit between zone Z1 and zone Z3. Zone Z1 may be an OT service zone. Zone Z2 may be an IT service zone. Zone Z3 may be an administration zone. The conduit policy CP72 associated with zone Z3 may include at least one of rule e and rule f.

Rule e: Deny packet transmission between the first application in zone Z1 or zone Z2 and the second application in zone Z3. Rule f: Allow packet transmission between the first application in zone Z1 or zone Z2 and the third application in zone Z3. The second application and the third application are different applications in zone Z3. In other words, the first application in zone Z1 or zone Z2 may access zone Z3 through permission control, that is, the conduit policy CP72 may only allow authorized packet flows between zone Z1 and zone Z3 and authorized packet flows between zone Z2 and zone Z3. For example, by utilizing container security profiles, applications in zone Z1 and zone Z2 may access administration zone Z3. In addition, the conduit policy CP72 may allow an application of a certain service module provided by the cloud platform to access an application of the same service module in the administration zone Z3. For example, conduit policy CP72 may allow applications in zones Z1 and Z2 to access applications with specific ports in administration zone Z3. In addition, it should be noted that the conduit policy CP72 may deny some applications in the administration zone Z3 to be accessed by applications in the zones Z1 and Z2. In other words, some applications in zone Z3 may be isolated, thereby improving the security of management services and security services.

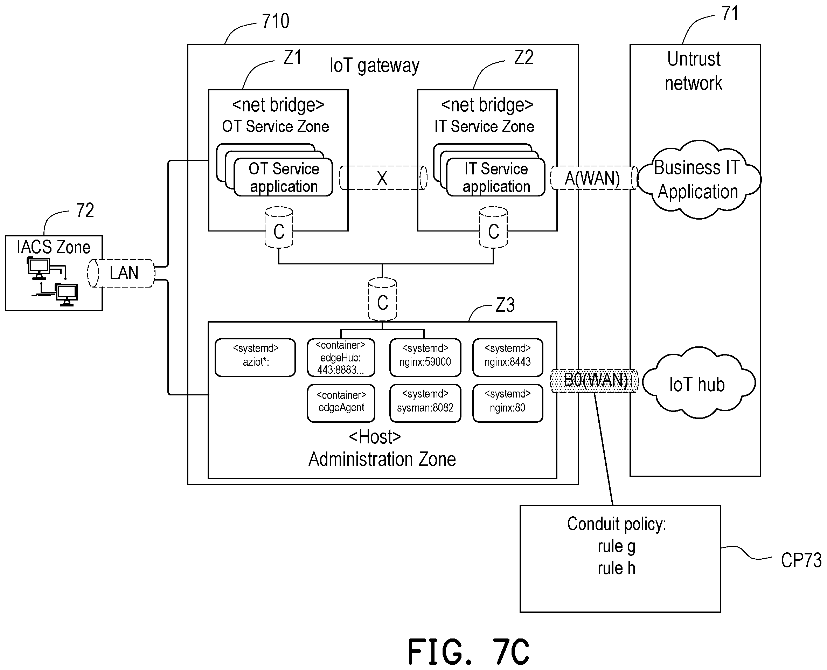

For example, FIG. 7C is a schematic diagram of a conduit policy of zones according to an embodiment of the disclosure. Referring to FIG. 7C, the IoT gateway 710 may configure a conduit policy CP73 for the conduit between the untrusted network 71 and the zone Z3. Zone Z1 may be an OT service zone. Zone Z2 may be an IT service zone. Zone Z3 may be an administration zone. The conduit policy CP73 associated with zone Z3 may include at least one of rule g and rule h.

Rule g: Allow packets to be transmitted from zone Z3 to the trusted services in untrusted network 71. Rule h: Deny packets to be transmitted from untrusted network 71 to zone Z3. In this way, the conduit between zone Z3 and the untrusted network 71 may be monitored to prevent network attacks from the untrusted network 71 (such as distributed denial of service (DDoS)).

In some embodiments, these zones include a first zone, a second zone, and a third zone. The conduit policy of the second zone may includes multiple rules. The rules may include denying packets to be transmitted from the second zone to the untrusted network, or allowing packets to be transmitted from the second zone to the local area network.

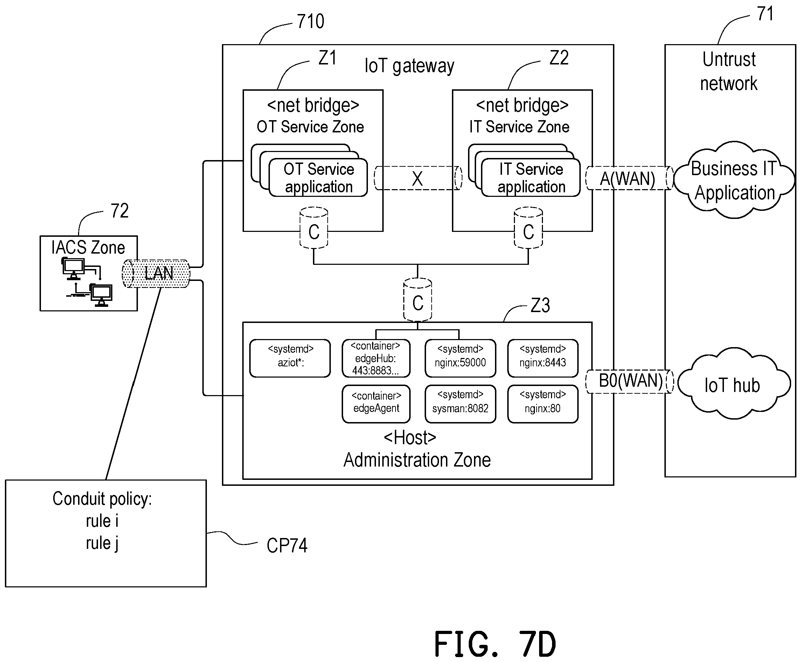

For example, FIG. 7D is a schematic diagram of a conduit policy of zones according to an embodiment of the disclosure. Referring to FIG. 7D , the IoT gateway 710 may configure a conduit policy CP74 for the conduit between the zone Z1 and the workplace zone 72 . Zone Z1 may be an OT service zone. Zone Z2 may be an IT service zone. Zone Z3 may be an administration zone. The conduit policy CP74 associated with zone Z1 may include at least one of rule i and rule j. Rule i: Deny packets to be transmitted from zone Z1 to untrusted network 71. Rule j: Allow packets to be transmitted from zone Z1 to workplace zone 72 via the local area network.

In some embodiments of IoT gateways using Linux kernel, zones Z1 to Z3 and conduit policies are implemented at the application layer. Accordingly, the netfilter in the Linux kernel may filter packets according to the conduit policy.

In some embodiments, the IoT gateway may obtain the zoning label of the application, wherein the zoning label corresponds to one of the zones. When installing an application on an IoT gateway, the IoT gateway may deploy the application to one of the zones based on the zoning label of the application.

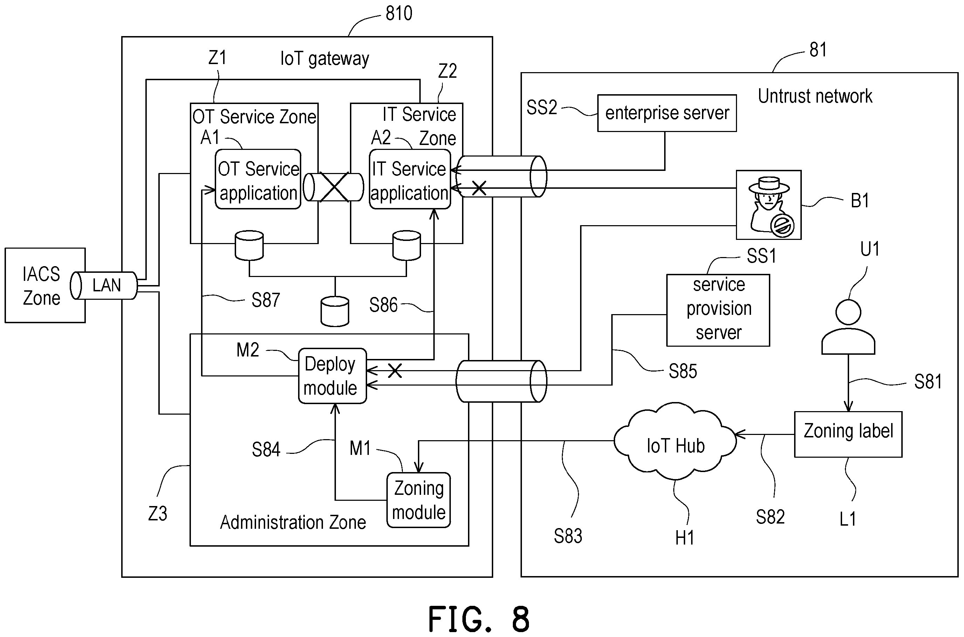

FIG. 8 is a schematic diagram of deploying applications to zones according to zoning labels according to an embodiment of the disclosure. Referring to FIG. 8, in step S81, the administrator U1 may determine the zoning labels L1 for the different applications. In step S82, the zoning label L1 set by the administrator U1 may be stored in the IoT Hub H1. In step S83, when an application is to be installed on the IoT gateway 801, the zoning labels L1 corresponding to different applications may be passed from the IoT hub H1 to the zoning module M1 in the IoT gateway 801, to facilitate remote deployment of the applications of the IoT gateway 801. In step S84, the zoning module M1 may provide the zoning label L1 to the installation module M2 in the IoT gateway 801. In step S85, the installation module M2 downloads the applications A1 and A2 from the service provision server SS1 (for example, a cloud service platform). In steps S86 and S87, during the installation process of applications A1 and A2, the installation module M2 assigns IP addresses of different subnets to applications A1 and A2 according to the zoning label L1, so as to deploy different applications A1 and A2 respectively to zones Z1 and zone Z2. In addition, through the configuration of the conduit policy of the conduit as described in the previous embodiment, packet transmission between the enterprise server SS2 and the application A2 may be allowed. However, packet transmission between attacker B1 and any zone within IoT gateway 801 may be denied.

It should be noted that, any content of every embodiment of the present application, as well as any content of the same embodiment, may be freely combined. Any combination of the above is within the scope of this application.

In summary, this disclosure is applicable to a IoT gateway in a IoT system and enhances the security of IoT devices by establishing zones and conduits. Specifically, applications deployed in an IoT gateway may be compartmentalized into multiple zones. Each zone may be associated with different conduit policies and permission controls, ensuring that only authorized entities may be able to access and perform specific functions. In other words, by establishing conduit policies for zones, communication between applications may be controlled and limitted. These conduit policies may manage the flow, filtering, and blocking of specific types of traffic, ensuring that only authorized communications occur between different zones. Therefore, the method of the present disclosure may protect the IoT system from unauthorized access and potential threats, thereby improving the overall security and credibility of the IoT environment. In addition, since the conduit policy may be set based on the zone, the configuration efficiency and flexibility of the packet management policy may be greatly improved, and the feasibility of remote deployment of application services may be improved.

## Claims

1. A method of secure compartmentalization for Internet of Things, IoT, application, adapted to an IoT gateway (110, 410, 510, 610, 710, 810), and comprising:
creating (S302) a plurality of zones (Z1, Z2, Z3, Z6) corresponding to a plurality of subnets by partitioning the subnets;
deploying (S304) an application installed in the IoT gateway (110, 410, 510, 610, 710, 810) to one of the zones (Z1, Z2, Z3, Z6);
configuring (S306) a conduit policy (CP1_1, CP1_2, CP2, CP3, CP4, CP5, CP71, CP72, CP73, CP74) associated with at least one of the zones (Z1, Z2, Z3, Z6); and
managing (S308) packet transmission of the zones (Z1, Z2, Z3, Z6) based on the conduit policy (CP1_1, CP1_2, CP2, CP3, CP4, CP5, CP71, CP72, CP73, CP74).

2. The method of secure compartmentalization for IoT application according to claim 1, wherein the step of creating (S302) the zones (Z1, Z2, Z3, Z6) corresponding to the subnets by partitioning the subnets comprising:
partitioning the subnets by establishing a virtual network interface, wherein each of the plurality of subnets corresponds to an IP address range.

3. The method of secure compartmentalization for IoT application according to claim 2, wherein the step of deploying (S304) the application installed in the IoT gateway (110, 410, 510, 610, 710, 810) to the one of the zones (Z1, Z2, Z3, Z6) comprising:
assigning a specific IP address within the IP address range of one of the subnets to the application to deploy the application to the one of the zones (Z1, Z2, Z3, Z6) corresponding to the one of the subnets.

4. The method of secure compartmentalization for IoT application according to any of claims 1-3, wherein the zones (Z1, Z2, Z3, Z6) comprise an Information Technology (IT) service zone and an Operational Technology (OT) service zone, the IT service zone comprises at least one IT service application, and the OT service zone comprises at least one OT service applications.

5. The method of secure compartmentalization for IoT application according to any of claims 1-4, wherein the zones (Z1, Z2, Z3, Z6) further comprise an administration zone, and the administration zone comprises at least one security service application.

6. The method of secure compartmentalization for IoT application according to claim 5, wherein the step of deploying (S304) the application installed in the IoT gateway (110, 410, 510, 610, 710, 810) to the one of the zones (Z1, Z2, Z3, Z6) comprises:
obtaining a service module provided by a cloud service platform, wherein the service module comprises the application;
deploying the application to the administration zone when the application belongs to a high data security level; and
deploying the application to the IT service zone or the OT service zone when the application belongs to a low data security level.

7. The method for secure partitioning of Internet of Things applications according to any of claims 1-6, further comprising:
obtaining a zoning label (L1) of the application, wherein the zoning label (L1) corresponds to the one of the plurality of zones (Z1, Z2, Z3, Z6).

8. The method of secure compartmentalization for IoT application according to claim 7, wherein the step of deploying (S304) the application installed in the IoT gateway (110, 410, 510, 610, 710, 810) to the one of the plurality of zones (Z1, Z2, Z3, Z6) comprises:
deploying the application to the one of the zones (Z1, Z2, Z3, Z6) according to the zoning label (L1) of the application when installing the application on the IoT gateway (110, 410, 510, 610, 710, 810).

9. The method of secure compartmentalization for IoT application according to any of claims 1-8, wherein the zones (Z1, Z2, Z3, Z6) comprise a first zone and a second zone, and the conduit policy (CP1_1, CP1_2, CP2, CP3, CP4, CP5, CP71, CP72, CP73, CP74) associated with the first zone comprises a plurality of rules, and the rules comprise allowing packets to be transmitted from the first zone to untrusted network, denying packets to be transmitted from the first zone to a workplace zone via a local area network, denying packets to be transmitted from the untrusted network to the first zone, or conditionally allowing packets to be transmitted from the untrusted network to the first zone.

10. The method of secure compartmentalization for IoT application according to any of claims 1-9, wherein the zones (Z1, Z2, Z3, Z6) comprise a first zone, a second zone and a third zone, and the conduit policy (CP1_1, CP1_2, CP2, CP3, CP4, CP5, CP71, CP72, CP73, CP74) associated with the third zone comprises a plurality of rules, and the rules comprise denying packet transmission between a first application in the first zone or the second zone and a second application in the third zone, or allowing packet transmission between the first application in the first zone or the second zone and the second application in the third zone.

11. The method for secure zoning of Internet of Things applications according to claim 10, wherein the rules further comprise denying packets to be transmitted from untrusted network to the third zone.

12. The method of secure compartmentalization for IoT application according to any of claims 1-11, wherein the zones (Z1, Z2, Z3, Z6) comprise a first zone, a second zone and a third zone, and the conduit policy (CP1_1, CP1_2, CP2, CP3, CP4, CP5, CP71, CP72, CP73, CP74) associated with the second zone comprises a plurality of rules, and the rules comprise denying packets to be transmitted from the second zone to an untrusted network, or allowing packets to be transmitted from the second zone to a local area network.

13. An Internet of Things gateway (110, 410, 510, 610, 710, 810), comprising:
a transceiver (113);
a storage device (112); and
a processor (111) connected to the transceiver (113) and the storage device (112), and configured to perform the method according to any one of claims 1 to 12.
